# EUROPEAN PATENT APPLICATION

(11) **EP 3 290 900 A1**
(43) Date of publication of application: **07.03.2018**
(21) Application number: 16786143.4
(22) Date of filing: 26.04.2016
(51) Int. Cl.: G01N 1/22, B01D 53/04

(54) **CHEMICAL SUBSTANCE CONDENSER**

(30) Priority: 28.04.2015 JP 2015091689
(71) Applicant: Panasonic Corporation, Kadoma-shi, Osaka 571-8501 (JP)
(72) Inventor: MURASHIMA, Yuji, Osaka-shi Osaka 540-6207 (JP); NAKATANI, Masaya, Osaka-shi Osaka 540-6207 (JP); NAKAO, Atsuo, Osaka-shi Osaka 540-6207 (JP)
(74) Representative: Grünecker Patent- und Rechtsanwälte PartG mbB
(86) International application number: PCT/JP2016/002192
(87) International publication number: WO 2016/174866

(57) **Abstract**

A chemical substance concentrator includes a tubular body, and a plurality of adsorption parts provided with predetermined intervals on a surface of the tubular body facing an inside of the tubular body. The chemical substance concentrator can cause a sample to easily pass through the chemical substance concentrator.

## Description

### TECHNICAL FIELD

The disclosure relates to a chemical substance concentrator capable of condensing volatile organic compounds in a sample.

### BACKGROUND ART

Volatile organic compounds (VOC) are contained in, e.g. exhaust gas, the air, and exhalation. In a conventional detection system for detecting volatile organic compounds contained in a sample, the volatile organic compounds are adsorbed on an adsorption part. After that, the detection system desorbs the volatile organic compounds from the adsorption part. The desorbed volatile organic compounds are detected by a detection unit.

PTL 1 is known as a prior art relating to the above-mentioned conventional detection system.

### CITATION LIST

### PATENT LITERATURE

PTL 1: Japanese Patent Laid-Open Publication No. 2012-220454

### SUMMARY

A chemical substance concentrator includes a tubular body, and adsorption parts provided at predetermined intervals on a surface of the tubular body facing the inside of the tubular body.

The chemical substance concentrator allows a sample to easily pass through the chemical substance concentrator.

### BRIEF DESCRIPTION OF DRAWINGS

FIG. 1 is a perspective view of a chemical substance concentrator in accordance with an exemplary embodiment.
FIG. 2 is a top view of the chemical substance concentrator in accordance with the embodiment.
FIG. 3A is a cross-sectional view of the chemical substance concentrator along line 3A-3A shown in FIG. 2.
FIG. 3B is a cross-sectional view of the chemical substance concentrator along line 3B-3B shown in FIG. 2.
FIG. 3C is an enlarged view of the chemical substance concentrator in accordance with the embodiment.
FIG. 4A is a side cross-sectional view of another chemical substance concentrator in accordance with the embodiment.
FIG. 4B is a cross-sectional side view of still another chemical substance concentrator in accordance with the embodiment.
FIG. 4C is a side cross-sectional view of a further chemical substance concentrator in accordance with the embodiment.
FIG. 4D is a side cross-sectional view of a further chemical substance concentrator in accordance with the embodiment.
FIG. 4E is a side cross-sectional view of a further chemical substance concentrator in accordance with the embodiment.
FIG. 4F is a side cross-sectional view of a further chemical substance concentrator in accordance with the embodiment.
FIG. 4G is a side cross-sectional view of a further chemical substance concentrator in accordance with the embodiment.
FIG. 4H is a side cross-sectional side view of a further chemical substance concentrator in accordance with the embodiment.
FIG. 5 is a side cross-sectional view of a further chemical substance concentrator in accordance with the embodiment.
FIG. 6 is a side cross-sectional view of a further chemical substance concentrator in accordance with the embodiment.
FIG. 7 is a side cross-sectional view of a further chemical substance concentrator in accordance with the embodiment.
FIG. 8 is a side cross-sectional view of a further chemical substance concentrator in accordance with the embodiment.

### DETAIL DESCRIPTION OF PREFERRED EMBODIMENT

A chemical substance concentrator in accordance with an exemplary embodiment of the present disclosure will be detailed below with reference to the drawings. Note that, each exemplary embodiment described in the following shows a preferable specific example of the present disclosure. Accordingly, the numerical values, shapes, materials, structural elements, the arrangement and connection of the structural elements, and the like shown in the following embodiment are mere examples, and thus are not intended to limit the present disclosure. Therefore, among the structural elements in the following embodiment, structural elements not recited in any one of the independent claims representing the most generic concepts of the present invention are described as arbitrary structural elements.

Besides, each view is a schematic diagram but not necessarily illustrated exactly. In each view, the same reference numerals denote the substantially same structures, and a redundant description may be omitted or simplified.

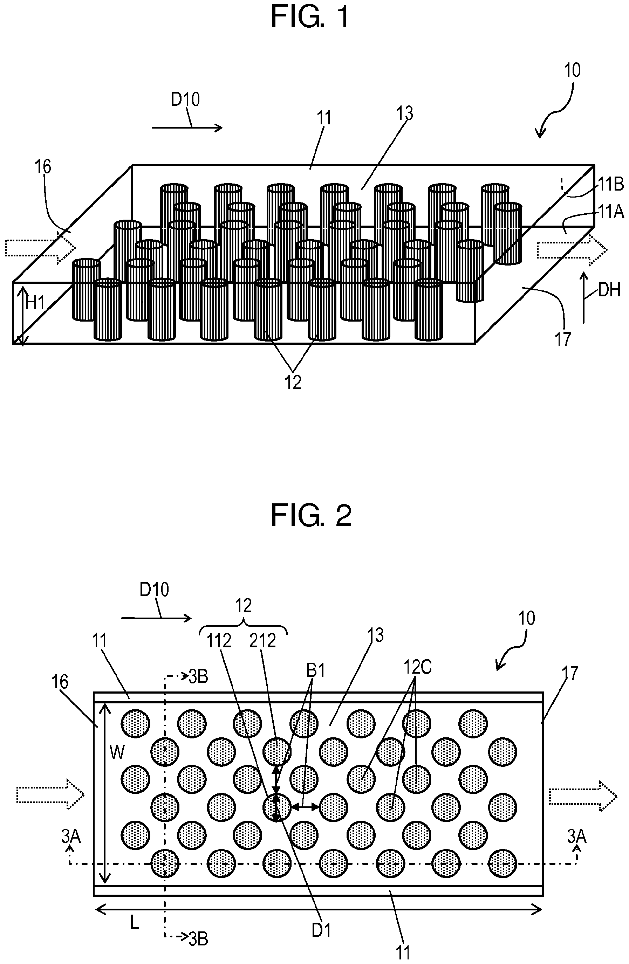

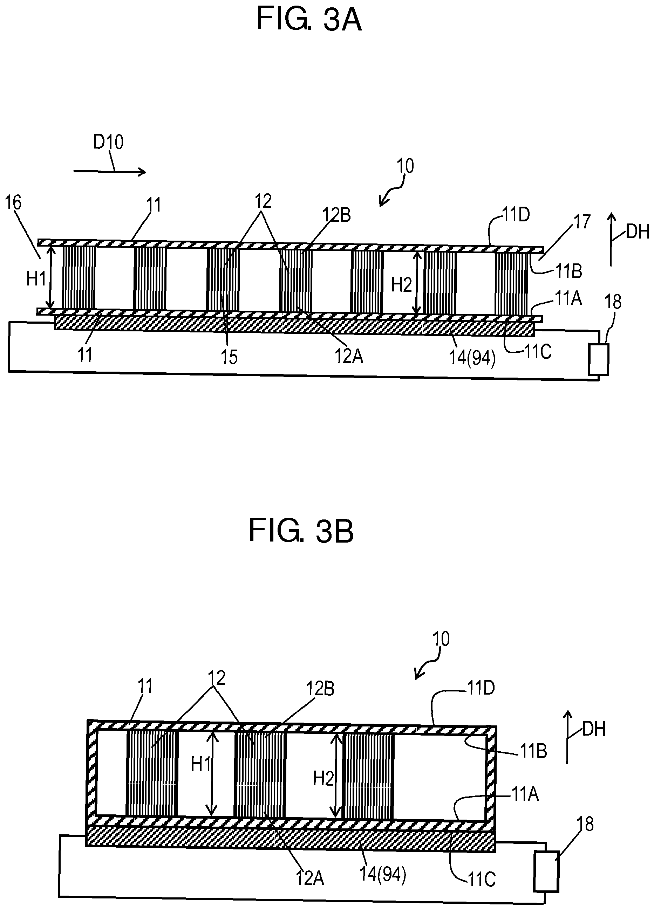

FIG. 1 is a perspective view of chemical substance concentrator 10 in accordance with an exemplary embodiment. FIG. 2 is a top view of chemical substance concentrator 10 for schematically showing an inside of chemical substance concentrator 10. FIG. 3A is a cross-sectional view of chemical substance concentrator 10 along line 3A-3A shown in FIG. 2. FIG. 3B is a cross-sectional view of chemical substance concentrator 10 along line 3B-3B shown in FIG. 2.

Chemical substance concentrator 10 is configured to adsorb molecules of a chemical substance contained in a sample. The sample is, e.g. gas, such as exhaust gas, the living space air, or human exhalation. The chemical substance is, e.g. a volatile organic compound (VOC).

Chemical substance concentrator 10 includes tubular body 11, adsorption part 12, and desorption part 94.

Tubular body 11 has inlet 16 for taking the sample into an inside of tubular body 11, and has outlet 17 for discharging the sample to the outside of tubular body 11. Flow passage 13 is formed inside tubular body 11 such that the sample flows from inlet 16 to outlet 17 in flow direction D10 to allow the sample to pass through the flow passage 13. Tubular body 11 may have various shapes, such as a cylinder tube or a rectangular tube. Tubular body 11 shown in FIG. 1 has a cross section having a rectangular shape. As shown in FIG. 3B, tubular body 11 has inner surfaces 11A and 11B that face flow passage 13 and are opposed to each other, outer surface 11C that is opposite to inner surface 11A, and outer surface 11D that is opposite to inner surface 11B. Inner surfaces 11A and 11B constitute flow passage 13.

In accordance with the embodiment, flow passage 13 has a cross section having width W of 1 mm and height H1 of 30 µm. Flow passage 13 has length L of 10 mm.

Tubular body 11 may be made of insulating material. Alternatively, tubular body 11 may be made of material having a surface which faces flow passage 13 and is covered with an insulator. Tubular body 11 may be made of, for example, insulators, such as glass, quartz, sapphire, or ceramic, or a silicon substrate having thermal silicon oxide formed on a surface thereof.

Inner surfaces 11A and 11B of tubular body 11 may be made of materials different from each other. In this case, a material forming tubular body 11 may be exposed from either one of inner surface 11A or inner surfaces 11B.

Adsorption part 12 adsorbs molecules of a chemical substance contained in the sample. Plural adsorption parts 12 are provided on inner surface 11A of tubular body 11 to be spaced from one another with predetermined interval B1. Adsorption part 12 has a circular column shape. Adsorption part 12 has end 12A and end 12B opposite to end 12A. End 12A of adsorption part 12 is fixed onto inner surface 11A of tubular body 11. In chemical substance concentrator 10, end 12B is provided on and fixed to inner surface 11B of tubular body 11.

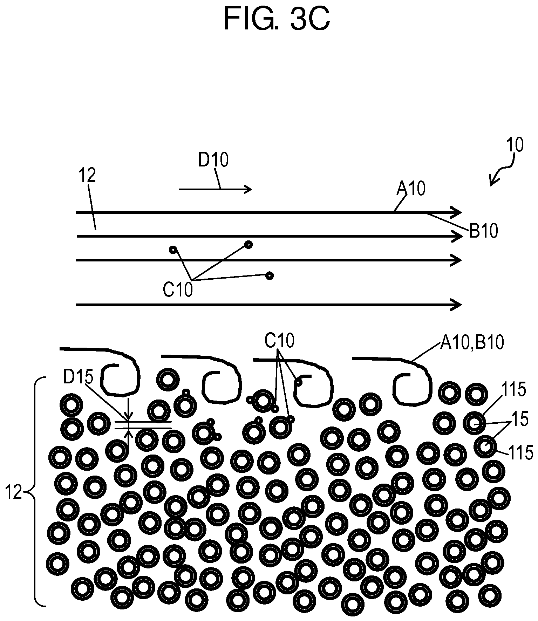

FIG. 3C is an enlarged view of chemical substance concentrator 10, and shows the periphery of adsorption part 12. Adsorption part 12 includes plural dense fibers 15. Fibers 15 forming adsorption part 12 increase a surface area of adsorption part 12. Sample A10 contains medium B10 of gas and molecules C10 of a chemical substance floating in medium B10. Adsorption part 12 is implemented by an aggregation of fibers 15 and has a surface with depressions and projections, thereby adsorbing molecules C10 of the chemical substance while rolling sample A10 (medium B10) of gas, as shown in FIG. 3C.

Interval B1 (see FIG. 2) between adsorption parts 12 adjacent to each other in a cross section of tubular body 11 perpendicular to flow direction D10 is larger than interval D15 between fibers 15 in the cross section of tubular body 11.

Fiber 15 has anisotropic properties. A layer for controlling a growing direction of fibers 15, a material layer serving as a core of fiber 15, and a catalyst layer are formed on inner surface 11A. After that, fibers 15 are grown by a vapor phase method or a liquid phase method. Fibers 15 are preferentially oriented in a direction substantially perpendicular to inner surface 11A.

Fibers 15 are made of metal oxides, such as ZnO, SnO₂, In₂O₃, In₂₋ₓSnₓO₃ (for instance, 0.1≤x≤0.2), NiO, CuO, TiO₂, and SiO₂. Oxygen on a surface of the metal oxide interacts with molecules of the chemical substance, thereby adsorbing the molecules of the chemical substance efficiently. Fiber 15 is made of a nanowire or a nanofiber.

Fiber 15 is covered with adsorption material 115 for adsorbing molecules of the chemical substance selectively.

For instance, in the case that carbon monoxide is adsorbed selectively, nickel and silver may be used as adsorption material 115. Further, in the case that ammonia or chlorine is adsorbed, molybdenum may be used as adsorption material 115. In the case that nitrogen oxide is adsorbed, zeolite may be used as adsorption material 115. In the case that hydrogen is adsorbed, palladium may be used as adsorption material 115. In the case that water is adsorbed, poly aniline may be used as adsorption material 115. In the case that molecules of a polar organic substance are adsorbed, a polyethylene glycol or PDMS (polydimethyl siloxane) may be used as adsorption material 115. In this case, adsorption material 115 is preferably made of a material having a surface having the same polarity as surfaces of the molecules. The material of adsorption material 115 can be selected according to the molecules of the chemical substance to be adsorbed as necessary.

Fiber 15 may be made of adsorption material 115 for adsorbing molecules of the chemical substance selectively. If fiber 15 forming adsorption part 12 adsorbs molecules of the chemical substance by itself, fiber 15 may not be covered with adsorption material 115.

In accordance with the embodiment, an average diameter of adsorption part 12 is more than or equal to several tens micrometers and less than or equal to several hundred micrometers. In accordance with the embodiment shown in FIG. 2, average diameter D1 of adsorption part 12 is approximately 200 µm.

One adsorption part 112 out of plural adsorption parts 12 is spaced from another adsorption part 212 out of plural adsorption parts 12 which is adjacent to adsorption part 112 by an interval B1 of about 200 µm. Plural adsorption parts 12 are meanderingly arranged such that centers 12C of adsorption parts 12 which are located close to one another in flow direction D10 do not overlap one another viewing in flow direction D10. In chemical substance concentrator 10 according to the embodiment, plural adsorption parts 12 are meanderingly arranged such that centers 12C of adsorption parts 12 adjacent to one another in flow direction D10 do not overlap viewing in flow direction D10.

The sample passes through between plural adsorption parts 12 to flow from inlet 16 to outlet 17 in flow direction D10. At this moment, the sample hardly flows into between plural fibers 15 in single adsorption part 12. This is because a pressure loss within single adsorption part 12 is substantially three or four orders of magnitude larger than a pressure loss between plural adsorption parts 12 since fibers 15 are densely gathered in single adsorption part 12.

In accordance with the embodiment, height H2 of adsorption part 12 in height direction DH directed from inner surface 11A to inner surface 11B is 30 µm. Adsorption part 12 extends from inner surface 11A to inner surface 11B. In other words, height H1 of flow passage 13 in height direction DH is equal to height H2 of adsorption part 12, i.e., 30 µm in accordance with the embodiment.

Desorption part 94 is provided on outer surface 11C of tubular body 11 opposite to inner surface 11A. Desorption part 94 desorbs the molecules of the chemical substance which has been adsorbed on adsorption part 12 from adsorption part 12 to return the desorbed molecules into the sample. Thus, chemical substance concentrator 10 can condense the chemical substance contained in the sample.

The desorbed molecules of the chemical substance are detected by, for example, a sensor provided downstream in flow direction D10 with respect to chemical substance concentrator 10. Further, the adsorbed molecules of the chemical substance can be desorbed to recover the adsorbing function of adsorption part 12.

In chemical substance concentrator 10 shown in FIGs. 1 to 3C, desorption part 94 is implemented by heating unit 14 that is connected to external power source 18 and heats adsorption parts 12. Heating unit 14 in accordance with the embodiment is implemented by, e.g. a metal wire or a wiring pattern made of resistance heating material. For instance, heating unit 14 may be made of a NiCr thin film having a meandering shape.

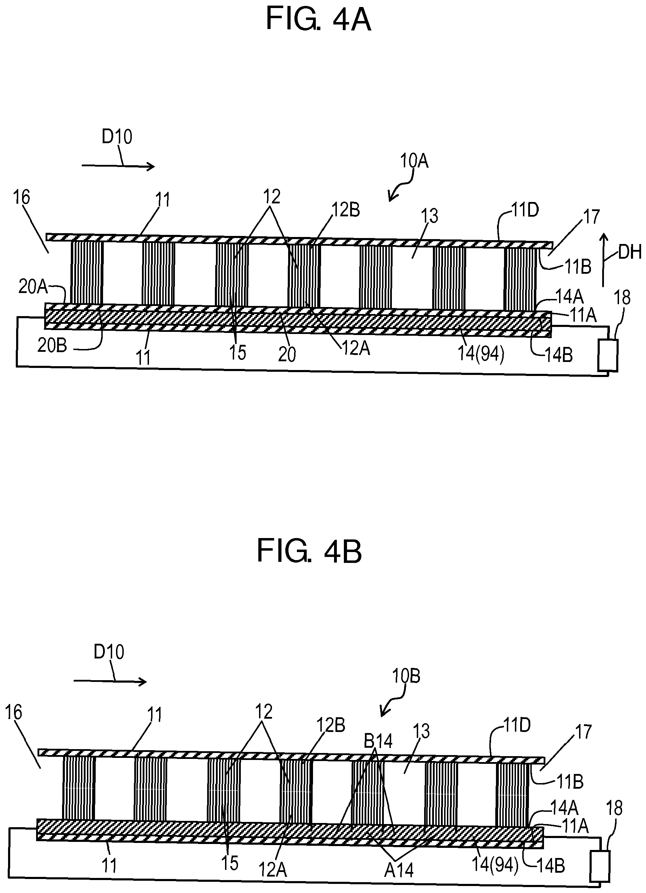

FIG. 4A is a cross-sectional view of another chemical substance concentrator 10A in accordance with the embodiment. In FIG. 4A, components identical to those of chemical substance concentrator 10 shown in FIGs. 1 to 3C are denoted by the same reference numerals. In chemical substance concentrator 10A shown in FIG. 4A, heating unit 14 serving as desorption part 94 is provided inside tubular body 11. Specifically, heating unit 14 is provided between tubular body 11 and each of adsorption parts 12. Insulating layer 20 is provided between heating unit 14 and each of adsorption parts 12. A current flowing in heating unit 14 can hardly flow into adsorption part 12. As a result, heating unit 14 can heat adsorption part 12 efficiently. Heating unit 14 has surface 14A and surface 14B opposite to surface 14A. Insulating layer 20 has surface 20A and surface 20B opposite to surface 20A. Surface 14B of heating unit 14 is provided on inner surface 11A of tubular body 11. Surface 20B of insulating layer 20 is provided on surface 14A of heating unit 14. Surface 20A of insulating layer 20 faces flow passage 13. In chemical substance concentrator 10A, end 12A of adsorption part 12 is provided on surface 20A of insulating layer 20. Insulating layer 20 is extremely thin, and thus allows adsorption part 12 to substantially contact heating unit 14.

FIG. 4B is a cross-sectional view of still another chemical substance concentrator 10B in accordance with the embodiment. In FIG. 4B, components identical to those of chemical substance concentrator 10A shown in FIG. 4A are denoted by the same reference numerals. Chemical substance concentrator 10B shown in FIG. 4B does not include insulating layer 20 of chemical substance concentrator 10A shown in FIG. 4A. In chemical substance concentrator 10B, adsorption part 12 has dielectric properties. Surface 14A of heating unit 14 faces flow passage 13. In chemical substance concentrator 10B, ends 12A of adsorption parts 12 are provided on heating unit 14. Adsorption part 12 may not have dielectric properties.

Adsorption part 12 implemented by an aggregation of fibers 15 has a small heat capacity depending on its structure. In chemical substance concentrators 10A and 10B shown in FIGs. 4A and 4B, adsorption part 12 contacts heating unit 14 or substantially contacts heating unit 14, thereby heating adsorption part 12 efficiently and desorbing molecules C10 which have been adsorbed. Therefore, adsorption part 12 made of fibers 15 can desorb the chemical substance with little power consumption.

Heating unit 14 may be made of material, such as a metal wire or a resistive heating material, generating heat. For instance, heating unit 14 includes heating sections A14 each facing respective one of adsorption parts 12 and connecting sections B14 for connecting heating sections A14 in series. In chemical substance concentrator 10A shown in FIG. 4A, each of heating sections A14 of heating unit 14 faces respective one of ends 12A of adsorption parts 12 across thin insulating layer 20, and substantially contacts respective one of ends 12A of adsorption parts 12. In chemical substance concentrator 10B shown in FIG. 4B, each of heating sections A14 of heating unit 14 contacts respective one of ends 12A of adsorption parts 12. Heating section A14 is made of a heat generating material that is patterned on a surface of end 12A of adsorption part 12, or a part of surface 20B of insulating layer 20 facing end 12A. The area of connecting section B14 is smaller than that of heating section A14. This configuration can heat only adsorption part 12. Thus, a cooling rate after the heating can be raised to adsorb and desorb molecules C10 of the chemical substance at high speed, thereby operating adsorption part 12 with small power consumption.

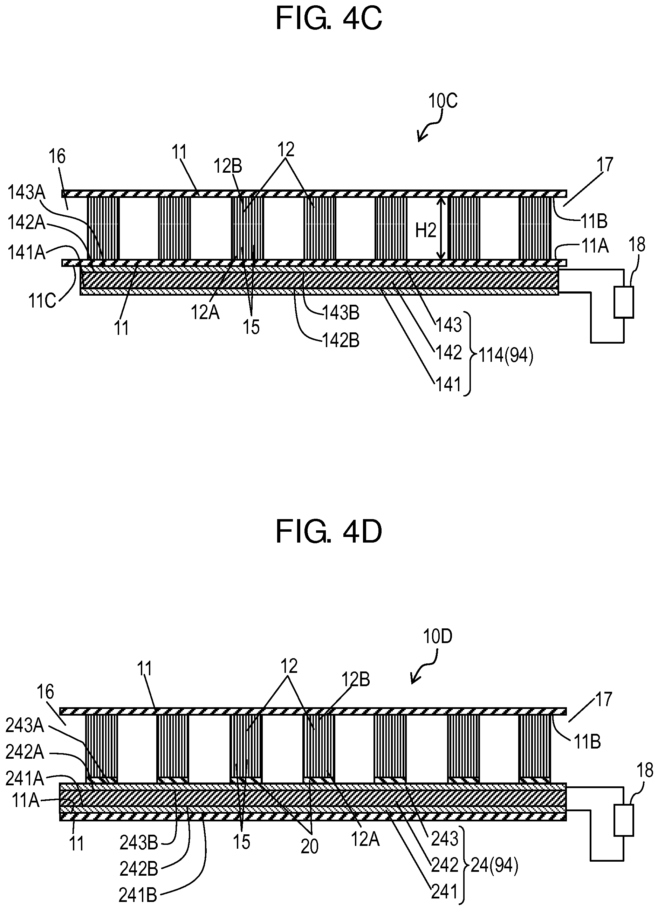

FIG. 4C is a cross-sectional view of further chemical substance concentrator 10C in accordance with the embodiment. In FIG. 4C, components identical to those of chemical substance concentrator 10 shown in FIG. 3A are denoted by the same reference numerals. Chemical substance concentrator 10C includes heating unit 114 serving as desorption part 94 for heating adsorption part 12, instead of heating unit 14 of chemical substance concentrator 10 shown in FIG. 3A. Heating unit 114 includes lower electrode 141, nanofibers 142, and upper electrode 143. Nanofibers 142 are formed between lower electrode 141 and upper electrode 143. Nanofibers 142 have conductivity. Nanofibers 142 are electrically connected to lower electrode 141 and upper electrode 143. Lower electrode 141 and upper electrode 143 are connected to external power source 18. Upper electrode 143 is provided on outer surface 11C of tubular body 11.

Upon having currents flow, nanofibers 142 generate heat due to resistances included in nanofibers 142. Accordingly, nanofibers 142 can be used as heating unit 14 of chemical substance concentrator 10 shown in FIG. 3A.

Nanofibers 142 heat up heating unit 114 to a high temperature with little electric power. Therefore, adsorption part 12 can be heated efficiently with small electric power. Nanofibers 142 have a small heat capacity, and allow heating unit 114 to be cool at a high speed. Therefore, heating unit 114 using nanofiber 142 can heat or cool adsorption part 12 more quickly.

Fibers 15 of adsorption part 12 and nanofibers 142 of heating unit 14 may be made of the same material. Alternatively, fibers 15 and nanofibers 142 may be formed of different materials.

Chemical substance concentrators 10A and 10B shown in FIGs. 4A and 4B may include heating unit 114 shown in FIG. 4C, instead of heating unit 14.

FIG. 4D is a cross-sectional view of further chemical substance concentrator 10D in accordance with the embodiment. In FIG. 4D, components identical to those of chemical substance concentrator 10A shown in FIG. 4A are dented by the same reference numerals. Chemical substance concentrator 10D includes vibrator 24 serving as desorption part 94, instead of heating unit 14 of chemical substance concentrator 10A shown in FIG. 4A. By vibrating adsorption part 12, vibrator 24 desorbs molecules C10 of the chemical substance adsorbed on adsorption part 12. Vibrator 24 has lower electrode 241, piezoelectric body 242, and upper electrode 243. Lower electrode 241 has surface 241A and surface 241B opposite to surface 241A. Piezoelectric body 242 has surface 242A and surface 242B opposite to surface 242A. Upper electrode 243 has surface 243A and surface 243B opposite to surface 243A. Piezoelectric body 242 is provided between lower electrode 241 and upper electrode 243. Surface 241B of lower electrode 241 is situated on inner surface 11A of tubular body 11. Surface 242B of piezoelectric body 242 is situated on surface 241A of lower electrode 241. Surface 243B of upper electrode 243 is situated on surface 242A of piezoelectric body 242. Insulating layers 20 are disposed on surface 243A of upper electrode 243. Ends 12B of adsorption parts 12 are bonded to surface 243A of upper electrode 243 via insulating layers 20. An alternating voltage with a frequency ranging from 1 MHz to 1 GHz can be applied between lower electrode 241 and upper electrode 243 to vibrate piezoelectric body 242 so as to desorb molecules C10 of the chemical substance, which is adsorbed on adsorption part 12 due to the vibration. Piezoelectric body 242 is made of piezoelectric materials, such as Pb(Zr,Ti)O₃ (lead zirconate titanate) or AlN (aluminum nitride).

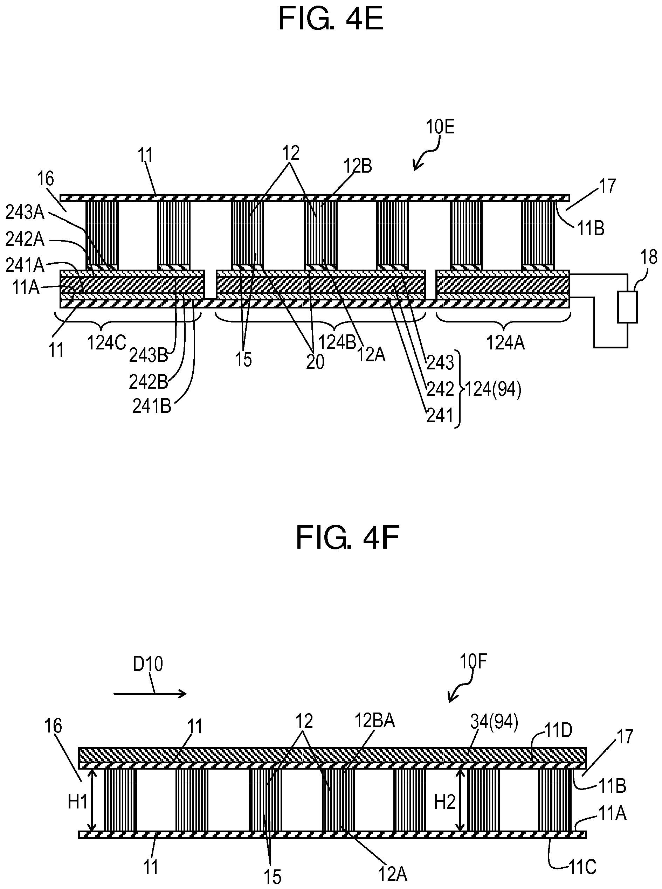

FIG. 4E is a cross-sectional view of further chemical substance concentrator 10E in accordance with the embodiment. In FIG. 4E, components identical to those of chemical substance concentrator 10D shown in FIG. 4D are denoted by the same reference numerals. Chemical substance concentrator 10E shown in FIG. 4E includes vibrator 124, instead of vibrator 24 of chemical substance concentrator 10D shown in FIG. 4D. In chemical substance concentrator 10D shown in FIG. 4D, adsorption parts 12 are provided on single vibrator 24. In chemical substance concentrator 10E shown in FIG. 4E, vibrator 124 has regions 124A to 124C separated from one another. Each of regions 124A to 124C of vibrator 124 includes lower electrode 241, piezo-electric body 242, and upper electrode 243. This configuration reduces a capacitance of each of regions 124A to 124C of vibrator 124, and increases resonance frequencies of regions 124A to 124C of vibrator 124, hence easily driving and vibrating regions 124A to 124C of vibrator 124 at a high frequency. Vibrator 124 can vibrate regions 124A to 124C at different frequencies or at different timings, so that the adsorbed molecules of a chemical substance can selectively be desorbed.

FIG. 4F is a cross-sectional view of further chemical substance concentrators 10F in accordance with the embodiment. In FIG. 4F, components identical to those of chemical substance concentrator 10 shown in FIG. 3A are denoted by the same reference numerals. Chemical substance concentrator 10F includes light irradiation unit 34 functioning as desorption part 94, instead of heating unit 14 of chemical substance concentrator 10 shown in FIG. 3A. Light irradiation unit 34 is provided on outer surface 11D of tubular body 11. Light irradiation unit 34 irradiates adsorption part 12 with light so as to desorb molecules C10 of the chemical substance adsorbed on adsorption part 12. In chemical substance concentrator 10F, tubular body 11 may preferably be made of material, such as glass, having a high light-transmissible. For instance, a halogen lamp, a laser, a near-infrared lamp, an infrared lamp, and the like can be employed as light irradiation unit 34.

Heating units 14 and 114, vibrators 24 and 124, and light irradiation unit 34 function as desorption part 94 for desorbing molecules C10 of the chemical substance adsorbed on adsorption part 12. Chemical substance concentrators 10, and 10A to 10F do not necessarily include desorption part 94.

A current may flow to an electrode connected to fiber 15 of adsorption part 12. Thus, adsorption part 12 per se functions as a heating unit.

The shape of adsorption part 12 may not necessarily have a circular column shape. For instance, adsorption part 12 may have an elliptic column shape or a polygonal column shape. Adsorption part 12 may have a conical shape, a pyramid shape, or an elliptic cone shape.

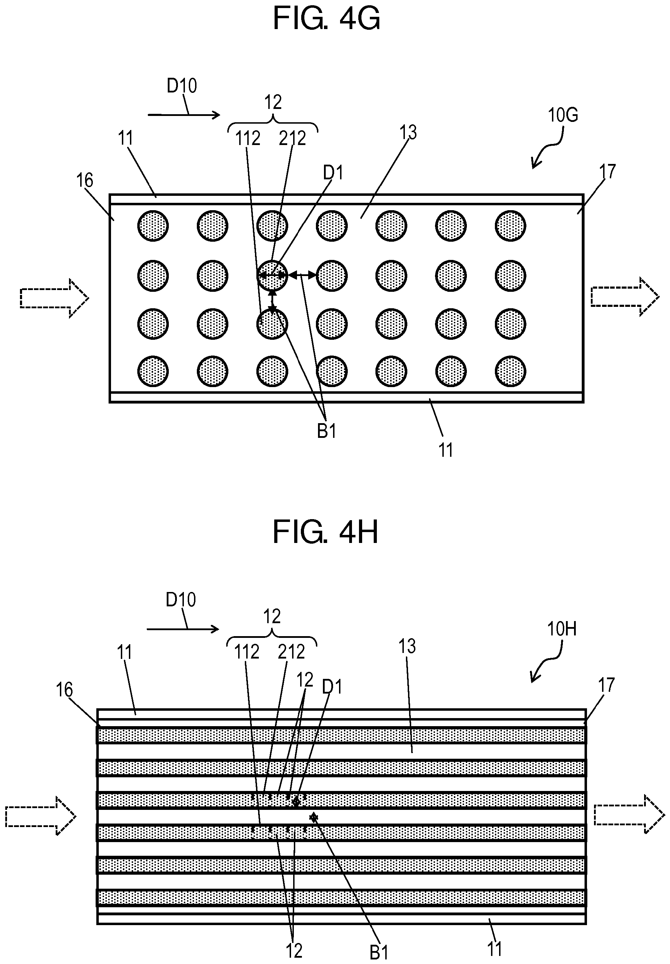

FIG. 4G is a top view of further chemical substance concentrator 10G in accordance with the embodiment. In FIG. 4G, components identical to those of chemical substance concentrator 10 shown in FIG. 2 are denoted by the same reference numerals. As shown in FIG. 4G, adsorption parts 12 are arranged at intervals in a row in flow direction D10 directed from inlet 16 to outlet 17 while centers 12C overlap in flow direction D10. This configuration reduces a pressure loss of fluid, and facilitates the sample to pass through flow passage 13 even if a pump with a small size and a low transport capacity is employed.

In the above-mentioned conventional detection system, carbon nanofiber is charged inside a tubular body as an adsorbent to provide an adsorption part. However, if the charged adsorbent has a high density, a pressure loss of the adsorption part will be increased. For that reason, the sample hardly passes through the adsorption part.

FIG. 4H is a cross-sectional view of further chemical substance concentrator 10H in accordance with the embodiment. In FIG. 4H, components identical to those of chemical substance concentrator 10G shown in FIG. 4G are denoted by the same reference numerals. In chemical substance concentrator 10H, adsorption parts 12 are arranged in a row without an interval in flow direction D10. In this case, adsorption parts 12 arranged along flow direction D10 are regarded as a single element. Interval D15 between adjacent fibers 15 arranged along flow direction D10 in the single element is smaller than interval B1 (see FIG. 2) between adsorption part 112 and adsorption part 212 in a direction perpendicular to flow direction D10. This configuration increases the density of adsorption part 12 while a pressure loss of fluid is reduced. Thus, the sample can efficiently be adsorbed on adsorption part 12.

Further, adsorption part 12 may not necessarily be implemented by an aggregation of fibers 15. Adsorption part 12 may be made of a material, such as a porous body, having numerous micro-voids.

An operation of chemical substance concentrator 10 will be described below.

The sample containing molecules of the chemical substance is inserted into chemical substance concentrator 10. Those molecules are adsorbed on adsorption parts 12 provided inside the flow passage.

For instance, in chemical substance concentrator 10 in accordance with the embodiment, height H1 of flow passage 13 is 30 µm, and width W of flow passage 13 in a direction perpendicular to height H1 and flow direction D10 is 1 mm. In the case that the flow rate is 1 ml/min, chemical substance concentrator 10 has a pressure loss of about 3.2 kPa, and the Reynolds number is 4.9. In the case that the flow rate is 5 ml/min, chemical substance concentrator 10 has a pressure loss of about 16 kPa, and the Reynolds number is 24.7. In the case that the flow rate is 10 ml/min, chemical substance concentrator 10 has a pressure loss of about 31.9 kPa, and the Reynolds number is 49.3.

With such a configuration, for example, a small sized pump with a maximum static pressure of 80kPa can be used to insert the sample into chemical substance concentrator 10.

A comparative example of a chemical substance concentrator in which adsorption part 12 is provided over the entire cross section of the flow passage will be described below. When the sample passes through the chemical substance concentrator at a flow rate of 1 ml/min, a pressure loss of the chemical substance concentrator is more than about 100000 kPa. For that reason, a small sized pump with a small capacity can hardly insert the sample into the chemical substance concentrator of the comparative example.

As shown in FIG. 3C, inserted sample A10 flows so as to flow around adsorption part 12 as a laminar flow, and flows along flow passage 13. At this moment, vortexes are produced around adsorption part 12 due to sub-micron to micron-sized depressions and projections caused by fibers 15 constituting adsorption part 12. Heavy substances, such as VOC, contained in the sample receive a centrifugal force due to the vortexes and hit fibers 15, so that adsorption part 12 can adsorb molecules more effectively than a typical adsorption part having a circular column shape.

When sample A10 is inserted into chemical substance concentrator 10, the Reynolds number is preferably smaller than 3000. This configuration allows sample A10 to flow behind adsorption part 12 as a laminar flow.

The Reynolds number is preferably smaller than 150. This configuration prevents a Karman vortex from being produced behind adsorption part 12. Accordingly, sample A10 also flows around behind adsorption part 12, so that more molecules C10 of the chemical substance are adsorbed.

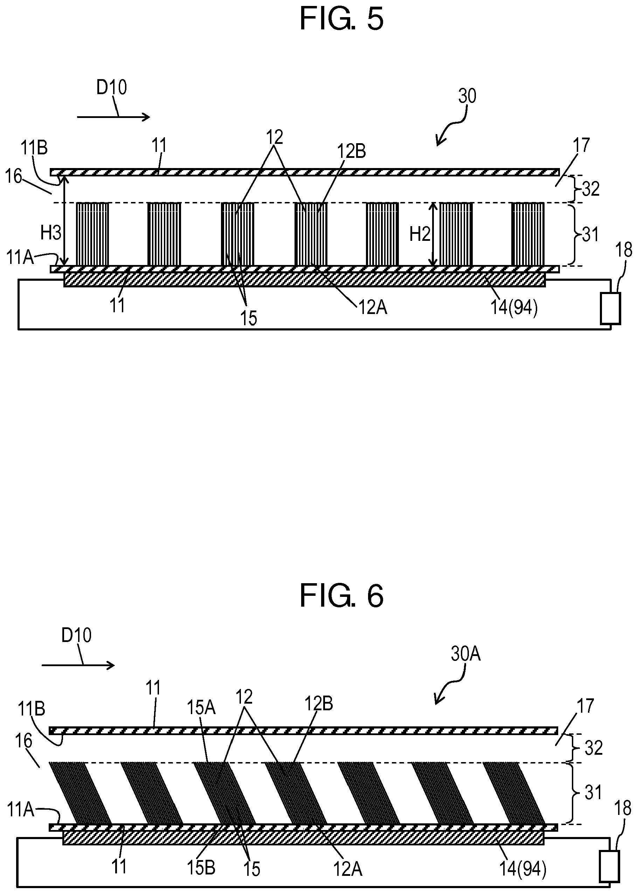

FIG. 5 is a side cross-sectional view of further chemical substance concentrator 30 in accordance with the embodiment. In FIG. 5, components identical to those of chemical substance concentrator 10 shown in FIGs. 1 to 3C are denoted by the same reference numerals. Chemical substance concentrator 30 is different from chemical substance concentrator 10 in that a space is provided above adsorption part 12. The other structures are the same as chemical substance concentrator 10.

Chemical substance concentrator 30 includes tubular body 11 and adsorption parts 12 provided on inner surface 11A of tubular body 11. End 12B of adsorption part 12 is provided on inner surface 11A while end 12A faces inner surface 11B with an interval between end 12B and inner surface 11B.

A space through which the sample flows is formed above adsorption part 12, i.e., between end 12A of adsorption part 12 and inner surface 11B.

For instance, height H3 of flow passage 13, i.e., a distance between inner surface 11A and inner surface 11B is 40 µm, and height H2 of adsorption part 12 is 30 µm. Adsorption section 12 does not contact inner surface 11B. In other words, chemical substance concentrator 30 has a two-layer structure, i.e., region 31 in which adsorption part 12 is formed and region 32 in which adsorption part 12 is not formed.

The pressure loss of chemical substance concentrator 30 can be calculated in the state a flow passage in which adsorption part 12 is formed and a flow passage in which adsorption part 12 is not formed are connected in parallel.

A pressure loss of region 31 in which adsorption part 12 is formed is larger than a pressure loss of region 32 in which adsorption part 12 is not formed. If a difference between the pressure losses of region 31 and region 32 increases, the sample hardly flow into region 31 in which adsorption part 12 is formed. For that reason, the pressure loss of region 31 is preferably identical to the pressure loss of region 32, or the difference between the pressure losses of regions 31 and 32 is about one digit order.

FIG. 6 is a side cross-sectional view of further chemical substance concentrator 30A in accordance with the embodiment. In FIG. 6, components identical to those of chemical substance concentrator 30 shown in FIG. 5 are denoted by the same reference numerals. In chemical substance concentrator 30A shown in FIG. 6, adsorption part 12 inclines so as to extend toward inlet 16 of flow passage 13. End 15B of fiber 15 is disposed on inner surface 11A. End 15A of fiber 15 is located closer to inlet 16 of flow passage 13 than end 15B of fiber 15 is. In other words, fiber 15 extends from inner surface 11A and inclines at an acute angle with respect to flow direction D10 of the sample. That is, ends 12B of adsorption parts 12 are located more downstream in flow direction D10 of the sample than ends 12A.

The sample also enters between fibers 15 of adsorption part 12 easily. For that reason, molecules of the chemical substance are adsorbed not only on end 12A, which is an upper surface of adsorption part 12, but also on fibers 15 located inside adsorption part 12.

Fibers 15 inclining toward inlet 16 are made of crystal fibers. For instance, in the case that the fibers are made of hexagonal ZnO, a crystal layer is formed as a core of fiber 15. The crystal layer is formed by sputtering, such as PVD (Physical Vapor Deposition).

Vaper-deposited particles formed by sputtering flow over a wide solid angle. A c-axis direction of the obtained columnar crystal grows with dispersion from an axis perpendicular to a substrate surface. The dispersion strongly depends on a flowing angle of the particles.

In a sputtering apparatus, a target is offset, and a region directly above a target erosion part is masked with a shielding plate. Accordingly, the sputtering apparatus sputters particles to prevent the particles from flowing in a vertical component thereof. As a result, a crystal layer of a columnar crystal oriented in the c-axis inclining in one direction with respect to the substrate surface is obtained.

The fibers are formed on the formed crystal layer by a vapor phase method or a liquid phase method, thereby obtaining fibers 15 inclining with respect to the substrate surface. For instance, inner surface 11A of tubular body 11 is used as a flat surface of the substrate, fibers 15 can be formed to incline at any angle with respect to flow direction D10. The angle ranges, for example, from 45 degree to 80 degree.

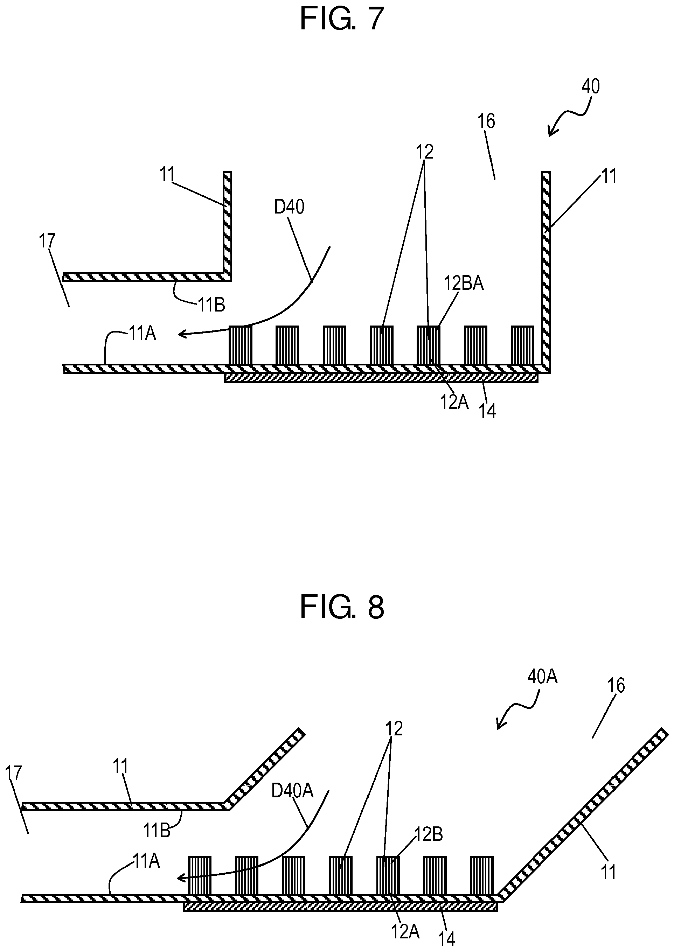

FIG. 7 is a side cross-sectional view of further chemical substance concentrator 40 in accordance with the embodiment. In FIG. 7, components identical to those of chemical substance concentrator 10 shown in FIGs. 1 to 3C are denoted by the same reference numerals. In chemical substance concentrator 40 shown in FIG. 7, inlet 16 of flow passage 13 may be provided above adsorption part 12. In other words, fibers 15 of adsorption part 12 extend perpendicularly from surface 14A toward inlet 16. Thus, flow direction D40 in which the sample flows has a component directed from end 12A to end 12B of adsorption part 12, and inclines with respect to adsorption part 12.

FIG. 8 is a side cross-sectional view of further chemical substance concentrator 40A in accordance with the embodiment. In FIG. 8, components identical to those of chemical substance concentrator 40 shown in FIG. 7 are denoted by the same reference numerals. In chemical substance concentrator 40A shown in FIG. 8, flow passage 13 of inlet 16 inclines at an angle with respect to adsorption part 12. In other words, inlet 16 is provided above a portion of inner surface 11A having adsorption part 12 thereon closer to inlet 16. Adsorption part 12 may incline relatively with respect to flow passage 13. Thus, flow direction D40A in which the sample flows has a component directed from end 12A to end 12B of adsorption part 12, and inclines with respect to adsorption part 12.

Accordingly, the sample can enter between fibers 15 of adsorption part 12. Chemical substance concentrators 40 and 40A can adsorb chemical molecules efficiently.

As mentioned above, chemical substance concentrator 10 (10A to 10H, 30, 30A, 40, and 40A) includes tubular body 11 and adsorption parts 12 provided in an inside of tubular body 11. Tubular body 11 forms flow passage 13 through which sample A10 containing a chemical substance flows in flow direction D10. Adsorption parts 12 adsorb the chemical substance, and desorb the adsorbed chemical substance. Adsorption part 12 is an aggregation of fibers 15 made of metal oxide. In the cross section of tubular body 11 perpendicular to flow direction D10, adsorption parts 12 are arranged to be spaced from one another by interval B1.

In the cross section of tubular body 11, interval B1 between adsorption parts 12 adjacent to each other among adsorption parts 12 may be larger than interval D1 between fibers 15 in adsorption part 12.

Tubular body 11 may have inner surface 11A on which adsorption parts 12 are provided, and inner surface 11B that faces inner surface 11A of tubular body 11 and is separated from adsorption parts 12.

End 12A of adsorption part 12 may be located more downstream in flow direction D10 than end 12B .

Fibers 15 may be made of ZnO.

Desorption part 94 desorbs, from adsorption parts 12, the chemical substance adsorbed on adsorption parts 12.

Desorption part 94 may be heating unit 14 for heating adsorption parts 12.

Desorption part 94 may be vibrator 24 for vibrating adsorption parts 12.

Desorption part 94 may be light irradiation unit 34 for irradiating adsorption parts 12 with light.

Adsorption parts 12 may be arranged meanderingly.

Adsorption parts 12 may be arranged in a row.

Adsorption parts 12 may be arranged in a row without an interval in a cross section of tubular body 11 other than the above-mentioned cross section.

Adsorption parts 12 may desorb the adsorbed chemical substance into sample A10.

Chemical substance concentrators 10, 10A to 10H, 30, 30A, 40, and 40A may be formed inside a pipe provided in a detection system, for example. In this case, the pipe of the detection system serves as tubular body 11.

As mentioned above, a chemical substance concentrator according to one or more aspects has been described based on the exemplary embodiments, the present disclosure is not limited to the exemplary embodiments. Forms obtained by various modifications to the exemplary embodiments that can be conceived by a person of skill in the art as well as forms realized by combining structural components in different exemplary embodiments, which are within the scope of the essence of the present disclosure, may be included in the one or more aspects.

### REFERENCE MARKS IN THE DRAWINGS

10, 10A-10H, 30, 30A, 40, 40A chemical substance concentrator
11 tubular body
11A inner surface (first inner surface)
11B inner surface (second inner surface)
12 adsorption part
12A end (first end)
12B end (second end)
13 flow passage
14 heating unit
15 fiber
16 inlet
17 outlet
18 power source
94 desorption part

## Claims

1. A chemical substance concentrator comprising:
a tubular body constituting a flow passage allowing a sample containing a chemical substance to flow through the flow passage in a flow direction; and
a plurality of adsorption parts provided inside the tubular body, the plurality of adsorption parts being configured to adsorb the chemical substance and desorb the adsorbed chemical substance, wherein
each of the plurality of adsorption parts is an aggregation of a plurality of fibers made of metal oxides, and
the plurality of adsorption parts are spaced from one another via an interval in a cross section of the tubular body perpendicular to the flow direction.

2. The chemical substance concentrator according to claim 1, where in the cross section of the tubular body, the interval between adsorption parts adjacent to each other out of the plurality of adsorption parts is larger than an interval between the plurality of fibers of the each of the plurality of adsorption parts.

3. The chemical substance concentrator according to claim 2, wherein the tubular body has a first inner surface and a second inner surface facing the first inner surface of the tubular body, the first inner surface having the plurality of adsorption parts provided thereon, the second inner surface being separated from the plurality of adsorption parts.

4. The chemical substance concentrator according to claim 2, wherein
the tubular body has a first inner surface and a second inner surface facing the first inner surface, and
the each of the plurality of adsorption parts has a first end and a second end opposite to the first end, the first end being provided on the first inner surface, the second end facing the second inner surface of the second inner surface of the tubular body,
the first end of the each of the plurality of adsorption parts is located more downstream of the flow direction than the second end of the each of the plurality of adsorption parts.

5. The chemical substance concentrator according to claim 2, wherein the plurality of fibers are made of ZnO.

6. The chemical substance concentrator according to claim 2, further comprising a desorption part configured to desorb, from the plurality of adsorption parts, the chemical substance adsorbed on the plurality of adsorption parts.

7. The chemical substance concentrator according to claim 6, wherein the desorption part comprises a heating unit for heating the plurality of adsorption parts.

8. The chemical substance concentrator according to claim 6, wherein the desorption part comprises a vibrator for vibrating the plurality of adsorption parts.

9. The chemical substance concentrator according to claim 6, wherein the desorption part comprises a light irradiation unit for irradiating the plurality of adsorption parts with light.

10. The chemical substance concentrator according to any one of claims 1 to 9, wherein the plurality of adsorption parts are arranged meanderingly.

11. The chemical substance concentrator according to any one of claims 1 to 9, wherein the plurality of adsorption parts are arranged in a row.

12. The chemical substance concentrator according to any one of claims 1 to 9, wherein the plurality of adsorption parts are arranged in a row without an interval between the plurality of adsorption parts in a further cross section of the tubular body different from than the cross section of the tubular body.

13. The chemical substance concentrator according to any one of claims 1 to 12, wherein the plurality of adsorption parts desorb the adsorbed chemical substance so as to return the desorbed chemical substance into the sample.
